# EUROPÄISCHE PATENTSCHRIFT

(11) **EP 1 582 040 B1**
(45) Veröffentlichungstag und Bekanntmachung des Hinweises auf die Patenterteilung: **20.02.2013**
(21) Anmeldenummer: 03785576.4
(22) Anmeldetag: 16.12.2003
(51) Int. Cl.: H04L 25/02, G06F 13/40, H04L 12/40

(54) **VORRICHTUNG FÜR EINEN LEITUNGSABSCHLUSS VON ZWEIDRAHT-LEITUNGEN**
DEVICE FOR A TWO-WIRE LINE TERMINAL
DISPOSITIF POUR UNE TERMINAISON DE LIGNES A DEUX FILS

(30) Priorität: 30.12.2002 DE 10261386
(43) Veröffentlichungstag der Anmeldung: 05.10.2005
(73) Patentinhaber: ROBERT BOSCH GMBH, 70442 Stuttgart (DE)
(72) Erfinder: FAHRBACH, Wilhelm, 74321 Bietigheim (DE); WEYHERSMUELLER, Udo, 71287 Weissach (DE)
(86) Internationale Anmeldenummer: PCT/DE2003/004133
(87) Internationale Veröffentlichungsnummer: WO 2004/062219

(56) Entgegenhaltungen:
- EP-A- 0 693 730
- EP-A- 1 211 849
- DE-A- 19 525 350

## Beschreibung

### Stand der Technik

Die Erfindung betrifft eine Vorrichtung für einen Leitungsabschluss von Zweidraht-Leitungen mit einem ersten und zweiten Abschlusswiderstand zwischen den zwei Drähten, wobei der erste und der zweite Abschlusswiderstand in Reihe geschaltet sind.

Eine solche Vorrichtung ist in der DE 195 25 350 A1 gezeigt. Darin wird vorgeschlagen, zwischen den beiden Drähten der Zweidraht-Leitung mindestens einen ersten und einen zweiten Abschlusswiderstand vorzusehen und die beiden Widerstände in Reihe zu schalten. Von der Verbindungsleitung zwischen den beiden Widerständen geht eine Leitung aus, die gegen ein festes Spannungspotential, insbesondere Masse geschaltet ist. Dabei ist der Ahschlusswiderstand insbesondere bei einem CAN-Bussystem bis jetzt fest vorgegeben, d. h. im Steuergerät bestückt oder unbestückt. Dadurch ist man im Einsatz nicht flexibel.

Die europäische Patentanmeldung EP 1211849 A2 beschreiht ein Kommunikationsnetzwerk mit einem Bus und mindestens einem Teilnehmer, wobei das Kommunikationsnetzwerk einen Schalter zwischen Teilnehmer und Bus umfasst, der abhängig vom Buszustand schaltet. Weiterhin umfasst sind eine Verbindungsein heit zwischen Teilnehmer und Bus und ein Abschlusswidentand der so mit dem Schalter verbunden ist, dass der Abschlusswiderstand abhängig vom Buszustand an den Bus verbunden wird. Der so verbundene Abschusswidcrstand ist jedoch nicht frei konfigurierbar und auch nicht steuerbar.

Es ist daher Aufgabe der Erfindung, eine Vorrichtung anzugeben, die höhere Flexibilität in der Anwendung beim Leitungsahschluss von Zweidraht-Leitungen ermöglicht.

### Vorteile der Erfindung

Die genannte Aufgabe wird gelöst durch eine Vorrichtung für einen Leitungsabschluss von Zweidrahtleitumgen mit wenigstens einem ersten und einem zweiten Abschlusswiderstand zwischen den zwei Drähten, wobei der erste und der zweite Abschlusswiderstand in Reihe geschaltet sind, wobei vorteilhafter Weise zwischen den beiden Abschlusswiderständen wenigstens ein Schaltmittel vorgesehen ist.

Dadurch erhöht sich im Einsatz die Flexibilität, da mit dem so konfigurierbaren Abschlusswiderstand ein schneller Wechsel bzw. eine schnelle Anpassung in der Applikation möglich ist.

Vorteilhafter Weise wird diese Vorrichtung in Zusammenhang mit einem CAN-Bussystem eingesetzt und übernimmt darin die Empfangs- und/oder Sendefunktion, so dass es sich bei der Zweidraht-Leitung um Teile eines CAN-Bussystems, also die CAN-High- und CAN-Low-Leitung handelt.

Zweckmäßiger Weise ist weiterhin eine Schaltlogik vorgesehen, welche abhängig von einem Eingangssignal das wenigstens eine Schaltmittel ansteuert.

Weiterhin von Vorteil ist, dass dieses Eingangssignal in einer speziellen Ausgestaltung von einem Rechenbaustein, insbesondere dem Mikrocontroller selbst erzeugt wird.

Durch das Einsetzen eines konfigurierbaren, insbesondere CAN-Abschlusswiderstandes ist es möglich, entweder durch softwaremäßige (durch digitalen Ausgang vom µc) oder hardwaremäßige, also über eine Hardwarebrücke im Kabelbaumstecker, Ansteuerung der Schaltlogik den Abschlusswiderstand auf die jeweilige Applikation anzupassen. Dadurch kann die Steuergerätevielfalt, insbesondere beim Kunden und Zulieferer, minimiert werden, wie beispielsweise ein einziges Steuergerät für Stand-Alone, Master und Slave anstatt eines für jeden Anwendungsfall. Daraus ergibt sich weniger Aufwand für Logistik und Lagerhaltung und insbesondere auch bei Kosten für Kunden und Zulieferer.

Vorteilhafter Weise ist zwischen den Abschlusswiderständen ein Symmetrierglied geschaltet, welches in einer zweckmäßigen Ausführungsform durch je ein Schaltmittel je Abschlusswiderstand mit diesem verbindbar ist.

Damit ergibt sich eine Anpassung eines Steuergeräts, insbesondere zur Steuerung von Betriebsabläufen bei einem Fahrzeug an beliebige Applikation durch insbesondere Softwarewkonfiguration.

### Zeichnung

Die Erfindung wird im Weiteren anhand der in der einzigen Figur dargestellten Zeichnung näher erläutert. Diese zeigt eine erfindungsgemäße Vorrichtung.

### Beschreibung der Ausführungsbeispiele

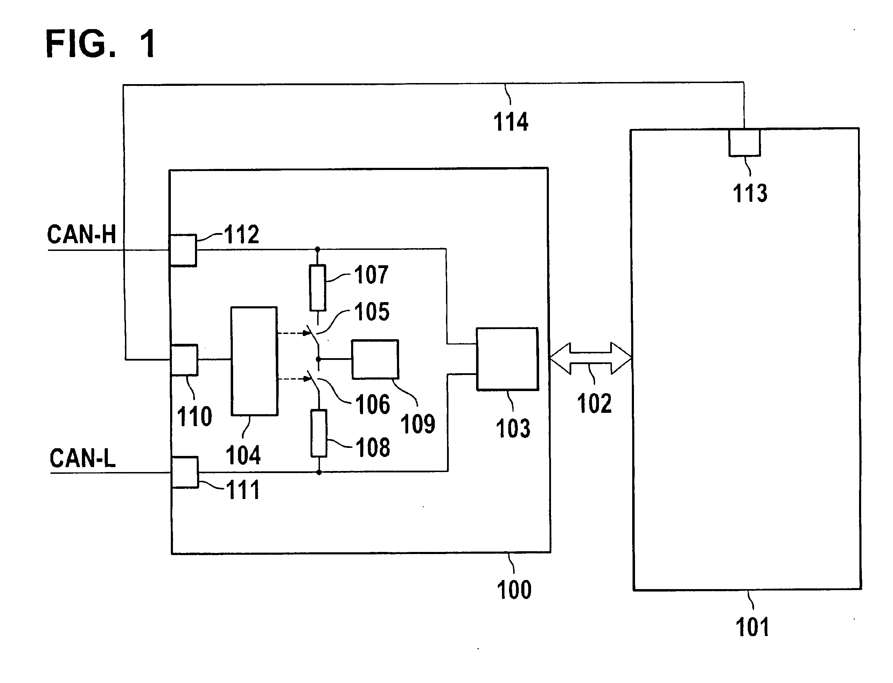

Die einzige Figur, Figur 1, zeigt eine CAN-High- und eine CAN-Low-Leitung CAN-H und CAN-L, die über Koppelelemente 111 und 112 mit einem Baustein 100, insbesondere als Funktion eines CAN-Transceivers verbunden sind. Der Baustein 100 übernimmt dabei, wie eben erwähnt, die Empfangs- und/oder Sendefunktionalität, also die Transceiver-Funktion insbesondere eines CAN-Bausteins diesbezüglich. Die CAN-High- und CAN-Low-Leitungen sind einem Treiberbaustein, insbesondere einem CAN-Treiberbaustein 103 zugeführt. Des Weiteren sind zwei Abschlusswiderstände 107 und 108 dargestellt, welche in Reihe geschaltet sind und mit Schaltmittel 105 und 106 miteinander sowie mit einer Symmetriereinheit, einem Symmetrierglied 109 verbindbar sind. Die Schaltmittel 105 und 106 werden von einer Steuerlogik 104 angesprochen, was durch die gestrichelten Pfeile symbolisch dargestellt ist. Die Steuerlogik selbst erhält ein Eingangssignal über Leitung 114, ein weiteres Koppelelement 110, beispielsweise vom Rechenbaustein oder Mikrocontroller 101 über einen Ausgang dessen beispielsweise Ausgang 113. Des Weiteren ist der Mikrocontroller mit dem Treiberbaustein zur Kommunikation über eine Kommunikationsverbindung 102 uni- und/oder bidirektional verbunden.

Mit dem Eingangssignal an der Schaltlogik 104 kann ausgewählt werden, ob der Abschlusswiderstand aktiv oder vom Bus abgetrennt ist. Dabei kann das Eingangssignal einerseits digital, also vom Mikrocontrollerausgang 113 oder über eine Brücke im Kabelbaumstecker erzeugt bzw. abgegriffen werden. Das Abtrennen vom Bus wird durch zwei elektrische Schalter, hier Schaltmittel 1005 und 106 realisiert. Die Konfiguration des Abschlusswiderstandes kann so durch einen µ-Ausgang zu jeder Zeit geändert werden, bei einer Brücke im Kabelbaumstecker erst nach dessen Umbau.

Durch das Einsetzen des konfigurierbaren CAN-Abschlusswiderstandes ist es möglich, entweder durch softwaremäßige oder hardwaremäßige Ansteuerung der Schaltlogik den Abschlusswiderstand auf die jeweilige Applikation anzupassen. Bei einer softwaremäßigen Anpassung dient dazu der digitale Ausgang des Mikrocontrollers 101. Bei einer hardwaremäßigen Anpassung muss dies durch eine Brücke im Kabelbaumstecker erfolgen. Dadurch kann bei Steuergeräten zur Steuerung von Betriebsabläufen, insbesondere an einem Fahrzeug, die Steuergerätevielfalt bei Kunden und Zulieferern minimiert werden. Somit erfolgt ein Anpassen des CAN-Abschlusswiderstandes des Steuergerätes an beliebige Applikationen lediglich durch Ändern der Softwarekonfiguration. Dies eröffnet eine einfache und flexible Möglichkeit einer schnellen Applikationsanpassung.

## Patentansprüche

1. Vorrichtung für einen Leitungsabschluss von Zweidraht-Leitungen (**CAN-H, CAN-L**) mit wenigstens einem ersten und zweiten Abschlusswiderstand **(107,108)** zwischen den zwei Drähten **(CAN-H, CAN-L),** wobei der erste und der zweite Abschlusswiderstand in Reihe geschaltet sind,
wobei zwischen den beiden Abschlusswidersanden wenigstens ein Schaltmittel **(105, 106)** vorgesehen ist,
**dadurch gekennzeichnet, dass** eine Schaltlogik **(104)** vorgesehen ist, welche derart ausgestaltet ist, dass sie abhängig von einem Eingangssignal das wenigstens eine Schaltmittel ansteuert.

2. Vorrichlung nach Anspruch 1, **dadurch gekennzeichnet, dass** zwischen die Abschlusswiderstände **(107, 108)** ein Symmetrierglied **(109)** geschaltet ist.

3. 4. Vorrichtung nach Anspruch 2 3-, **dadurch gekennzeichnet, dass** jeder Abschlusswiderstand **(107,108)** durch ein Schaltmittel **(105, 106)** mit dem Symmetrierglied **(109)** verbindbar ist.

4. Vorrichtung nach Anspruch 1, **dadurch gekennzeichnet, dass** das Eingangssignal von einem Rechenbaustein **(101)** erzeugt wird.

5. Vorrichtung nach Anspruch 1, **dadurch gekennzeichnet, dass** die Zweidraht-Leitungen **(CAN-H, CAN-L)** Teil eines CAN-Bussystems sind und die Vorrichtung die Empfangs - und/oder Sendefulktion in dem CAN-Bussystem wahrnimmt.

## Claims

1. Device for a line terminal of two-wire lines (CAN-H, CAN-L) having at least a first and a second terminating resistor (107, 108) between the two wires (CAN-H, CAN-L), wherein the first and the second terminating resistor are connected in series,
wherein at least one switching means (105, 106) is provided between the two terminating resistors,
**characterized in that** a switching logic (104) is provided, which is configured in such a way that it actuates the at least one switching means as a function of an input signal.

2. Device according to Claim 1, **characterized in that** a balun (109) is connected between the terminating resistors (107, 108).

3. Device according to Claim 2, **characterized in that** each terminating resistor (107, 108) can be connected to the balun (109) by a switching means (105, 106).

4. Device according to Claim 1, **characterized in that** the input signal is generated by a computing module (101).

5. Device according to Claim 1, **characterized in that** the two-wire lines (CAN-H, CAN-L) are part of a CAN bus system, and the device performs the reception function and/or transmission function in the CAN bus system.

## Revendications

1. Dispositif pour une terminaison de lignes à deux fils (CAN-H, CAN-L) avec au moins des première et deuxième résistances terminales (107, 108) entre les deux fils (CAN-H, CAN-L), les première et deuxième résistances terminales étant montées en série,
au moins un moyen de commutation (105, 106) étant prévu entre les deux résistances terminales,
**caractérisé en ce qu'**une logique de commutation (104) est prévue, laquelle est réalisée de manière à commander cet au moins un moyen de commutation en fonction d'un signal d'entrée.

2. Dispositif selon la revendication 1, **caractérisé en ce qu'**un symétriseur (109) est monté entre les résistances terminales (107, 108).

3. Dispositif selon la revendication 2, **caractérisé en ce que** chaque résistance terminale (107, 108) peut être reliée au symétriseur (109) grâce à un moyen de commutation (105, 106).

4. Dispositif selon la revendication 1, **caractérisé en ce que** le signal d'entrée est généré par un module de calcul (101).

5. Dispositif selon la revendication 1, **caractérisé en ce que** les lignes à deux fils (CAN-H, CAN-L) font partie d'un système de bus CAN et que le dispositif reconnaît la fonction de réception et/ou d'émission dans le système de bus CAN.
